# EUROPEAN PATENT APPLICATION

(11) **EP 4 687 260 A1**
(43) Date of publication of application: **04.02.2026**
(21) Application number: 25189595.9
(22) Date of filing: 15.07.2025
(51) Int. Cl.: H02J 7/00, H04R 1/10

(54) **WIRELESS EARPHONE, WIRELESS EARPHONE SYSTEM, AND CHARGING METHOD**

(30) Priority: 30.07.2024 CN 202411036797
(71) Applicant: Harman International Industries, Incorporated, Stamford, CT 06901 (US)
(72) Inventor: GRUIJTERS, Sebastiaan, Stamford, CT 06901 (US); CAI, Eric, Stamford, CT 06901 (US)
(74) Representative: Westphal, Mussgnug & Partner, Patentanwälte mbB

(57) **Abstract**

A wireless earphone, a wireless earphone system, and a charging method are provided. A wireless earphone may include: a first group of contact electrodes, for contacting with a second group of contact electrodes of a charger to establish an electrical connection between the wireless earphone and the charger; an earphone module, for outputting a sound signal; a power module, for providing operating power to the earphone module, where the power module is charged from the charger via the first group of contact electrodes; and a control module, configured to: in response to establishment of the electrical connection between the wireless earphone and the charger, perform control to prohibit charging the power module using charging power from the charger within a first time period; and after expiration of the first time period, perform control to allow charging the power module using the charging power from the charger.

## Description

### Technical Field

The present disclosure relates to the field of electronic device technologies, and in particular, to a wireless earphone, a wireless earphone system, and a charging method.

### Background

At present, as users' requirements for portability increase, wireless earphones are increasingly used by people. Wireless earphones are apparatuses that use speakers close to cars to convert audio electrical signals received via wireless communication into audible sound signals without any visible connecting wires. A power module in the wireless earphone needs to be charged to provide power to an earphone module in the wireless earphone so that the earphone module can send sound signals.

For example, external power may come from a battery unit in a charger outside the wireless earphone (for example, when the charger is a matching charging case of the wireless earphone) or another power source (for example, mains power), where power from the mains power may be converted by a power conversion circuit in the charger and then used to charge the power module of the wireless earphone.

A reasonable charging method for wireless earphones may improve the charging effect of the wireless earphones and extend service life of the wireless earphones, and therefore, it is the focus of research in this field.

### Summary of the Invention

According to one aspect of the present application, a wireless earphone is provided. The wireless earphone may include: a first group of contact electrodes, for contacting with a second group of contact electrodes of a charger to establish an electrical connection between the wireless earphone and the charger; an earphone module, for outputting a sound signal; a power module, for providing operating power to the earphone module, where the power module is charged from the charger via the first group of contact electrodes; and a control module, configured to: in response to establishment of the electrical connection between the wireless earphone and the charger, perform control to prohibit charging the power module using charging power from the charger within a first time period; and after expiration of the first time period, perform control to allow charging the power module using the charging power from the charger.

Optionally, the control circuit may further be configured to: in response to a power level of the power module being greater than or equal to a first threshold during the first time period, perform control to charge the power module with a charging current having a first value after expiration of the first time period; and in response to the power level of the power module being less than the first threshold during the first time period, perform control to charge the power module with a charging current having a second value after expiration of the first time period, where the second value is greater than the first value.

Optionally, the control module may further be configured to: during a period when the power module is charged with the charging current having the second value, in response to a latest detected power level of the power module being greater than a second threshold, perform control to charge the power module with a charging current having a third value, where the third value is less than the second value, the third value is the same as or different from the first value, and the second threshold is the same as or different from the first threshold.

Optionally, the control module may include: a rechargeable battery, for storing power and providing the operating power to the earphone module; and a charging circuit, connected to the first group of contact electrodes to receive the charging power from the charger, and configured to, in response to control of the control module, convert the charging power from the charger into a charging current for charging the rechargeable battery.

Optionally, in response to a power level of the power module being greater than or equal to the first threshold, the control module may provide a first control signal to the charging circuit, for controlling the charging circuit to charge the rechargeable battery with a charging current having the first value; and in response to the power level of the power module being less than the first threshold, the control module may provide a second control signal to the charging circuit, for controlling the charging circuit to charge the rechargeable battery with a charging current having the second value.

Optionally, the charger is a charging case, and includes a charging main body and a case cover, where in response to a closed state of the case cover of the charging case, the control module determines that the first time period expires.

Optionally, the first time period has a preset time length, or the wireless earphone further includes: a connection detection module for detecting a connection state of the electrical connection between the wireless earphone and the charger, and where in response to the connection detection module detecting that the connection state meets a preset requirement, the control module determines that the first time period expires.

Optionally, the control module may further be configured to: establish a wireless communication connection with an external electronic device; acquire an audio signal from the external electronic device based on the wireless communication connection; and control, based on the audio signal, the earphone module to output the sound signal.

According to one aspect of the present application, a wireless earphone system is provided, and the wireless earphone system may include: a charging case; and the wireless earphone as described above, where the charging case is used for accommodating the wireless earphone.

According to one aspect of the present application, a charging method for a wireless earphone is provided, a power module in the wireless earphone being used for acquiring charging power from a charger, and the method includes: in response to establishment of an electrical connection between the wireless earphone and the charger, performing control to prohibit charging the power module using charging power from the charger within a first time period; and after expiration of the first time period, performing control to allow charging the power module using the charging power from the charger.

Therefore, in the wireless earphone of the embodiment of the present application, the charging process of the power module in the wireless earphone is delayed so that the wireless earphone is charged after a connection state of the electrical connection between the charger and the wireless earphone is in a good state, which may reduce an electrolysis phenomenon at the contact electrode, thereby alleviating a corrosion problem of the contact electrode. In addition, the solution of adaptively controlling the charging current according to the power level of the power module of the wireless earphone may enable charging the wireless earphone with a small charging current in most cases, which may also reduce the electrolysis phenomenon at the contact electrode, thereby further alleviating the corrosion problem of the contact electrode. Therefore, the corrosion problem at the contact electrode of the wireless earphone of the embodiment of the present application can be alleviated, so that the charging performance and service life of the wireless earphone and its contact electrodes can be improved.

### Brief Description of the Drawings

FIG. 1A to FIG. 1B show schematic diagrams of a wireless earphone system according to an embodiment of the present disclosure.
FIG. 2 shows a schematic diagram of a charging solution for charging a wireless earphone.
FIG. 3 shows an example structure of a connection detection module according to an embodiment of the present application.
FIG. 4 shows a schematic diagram of a charging solution for charging a wireless earphone according to an embodiment of the present application.
FIG. 5 shows a process flow of a charging solution according to an embodiment of the present disclosure.
FIG. 6 shows a schematic diagram of experimental results of five different experimental conditions for a charging process of a wireless earphone by a charger.
FIG. 7 shows a schematic flowchart of a charging method for charging a wireless earphone by a charger according to an embodiment of the present application.

### Detailed Description

Several illustrative embodiments are described with respect to the accompanying drawings, which form a part of the specification. Although specific embodiments that may implement one or more aspects of the present disclosure are described below, other embodiments may be used and various modifications may be made without departing from the scope of the disclosure or the spirit of the appended claims.

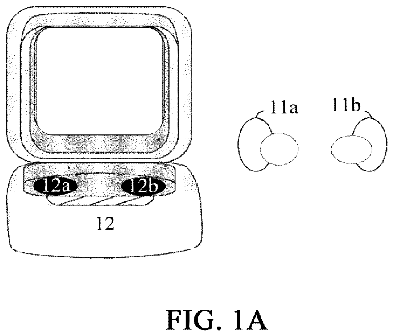

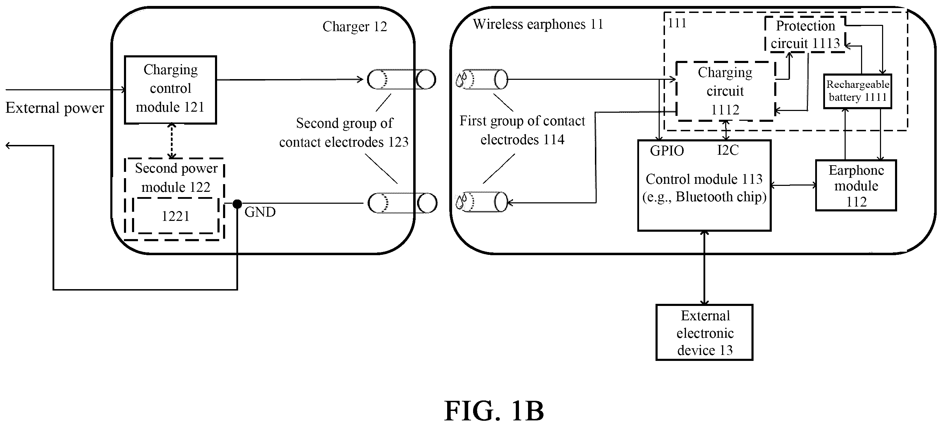

In the following, terms "first" and "second" are merely used for the purpose of description, and cannot be understood as indicating or implying relative importance or implicitly indicating the number of indicated technical features. Therefore, features defined as "first" or "second" may explicitly or implicitly include one or more of such features. FIG. 1A and FIG. 1B show schematic diagrams of a wireless earphone system according to an embodiment of the present disclosure. FIG. 1A shows a product package diagram when a charger in a wireless earphone system is a charging case. FIG. 1B shows a schematic structural diagram of charging-related parts in a wireless earphone system.

The wireless earphone system 10 may include a wireless earphone 11 and a charger 12. The charger 12 may be a charging case for accommodating the wireless earphone 11 or may include a charging control module that converts external power, such as mains power, into power capable of charging the wireless earphone 11.

As an example, the wireless earphone 11 may be a True Wireless Stereo (TWS) earphone and an Open Wearable Stereo (OWS) earphone, both of which have a corresponding charging case. The charging case generally has two accommodating spaces for accommodating two wireless earphones for the left ear and the right ear. When the charger is the charging case, as shown in FIG. 1A, two wireless earphones 11 (respectively indicated as 11a and 11b) are placed in corresponding accommodation spaces (indicated as 12a and 12b) of the charging case. The charging case establishes an electrical connection with each wireless earphone through contact with electrodes, thereby realizing data transmission, charging, and power on/off control of the wireless earphone.

The wireless earphone system shown in FIG. 1B is a schematic diagram of a system in which the charger 12 charges a wireless earphone, and another earphone has a similar wireless earphone system correspondingly.

The embodiments of the present application mainly involve the process of charging the wireless earphone 11, and therefore, the schematic diagram of the wireless earphone system in FIG. 1B mainly shows various components related to a charging process of the wireless earphone 11, but in fact the charger 12 and the wireless earphone 11 may also include other components in addition to the components shown in FIG. 1B.

As shown in FIG. 1B, the wireless earphone 11 may include a first power module 111, an earphone module 112, and a control module 113. The earphone module 112 may obtain power for normal operation (referred to as operating power) from the first power module 111 to output a sound signal under the control of the control module 113. For example, the control module 113 may establish a wireless communication connection with an external electronic device 13 (for example, a mobile phone), obtain an audio signal from the external electronic device 30 based on the wireless communication connection, and control the earphone module 112 to output a sound signal based on the audio signal. For example, the first power module 111 may include a rechargeable battery 1111 for storing power and providing operating power to the earphone module. In this case, the description of a power level of the power module in the present application may refer to a power level of the rechargeable battery. Optionally, the first power module 111 may further include a charging circuit 1112 and/or a protection circuit 1113. The charging circuit 1112 may adjust, under the control of the control module 113, a charging current for charging the rechargeable battery, and the protection circuit 1113 may implement overcurrent protection and the like. The charging circuit 1112 may be a charging control integrated circuit (IC), which has main functions including controlling the charging process, thereby ensuring the safety and efficiency of charging the rechargeable battery, and may include functions such as controlling a battery voltage and current and communicating with an external control module. In some cases, the wireless earphone may not include a charging circuit and/or a protection circuit, and the charging power from the charger may be directly used to charge the rechargeable battery.

In addition, the charger 12 in FIG. 1B may include a charging control module 121. The charging control module 121 in FIG. 1B may be an integrated chip, and may include functions such as power conversion and charging control. In addition, when the charger 12 is a charging case, the charger 12 may further include a second power module 122, and an energy storage capacity of a rechargeable battery 1221 in the second power module 122 may be greater than that of the rechargeable battery 1111 in the first power module 111. The charging control module 122 may receive external power and convert the external power (such as rectification and/or voltage reduction) to provide charging power to the wireless earphone. Alternatively, the rechargeable battery 1221 of the second power module 121 may be charged by the external power (which may be converted via the charging control module 121) and store the power, and after the charger 12 is electrically connected to the wireless earphone 12, the charging control module 121 may convert the stored power from the rechargeable battery 1221, for providing the charging power to the wireless earphone.

To facilitate charging of the wireless earphone 12, the wireless earphone 11 may have a first set of contact electrodes 114, which may contact with a second set of contact electrodes 123 of the charger 12 to establish an electrical connection between the wireless earphone and the charger, where power transfer can be achieved based on the electrical connection. In addition, in order to save the volume of the wireless earphone, as few contact electrodes as possible need to be arranged. Therefore, power and communication transmission may be simultaneously achieved through the first group of contact electrodes 114 of the wireless earphone 11 and the second group of contact electrodes 123 of the charger. For example, when the wireless earphone interacts with the charger, based on the principle of power-line communication, a data communication signal may be loaded on a charging signal, and thus the communication signal is demodulated through a carrier signal. That is, the charging process/communication/power on/off control process between the wireless earphone and the charger may multiplex the contact electrodes. It should be noted that FIG. 1B shows that a first quantity of contact electrodes included in the first group of contact electrodes and a second quantity of contact electrodes included in the second group of contact electrodes are both 2, but it should be understood that the first quantity and the second quantity may be other quantities as long as they are equal. The contact electrodes shown in FIG. 1B are only contact electrodes related to the charging process or multiplexed contact electrodes for the charging process/communication/power on/off control process.

The charger usually adopts a metal electrode structure to implement the second group of contact electrodes 123 to contact with the first group of contact electrodes 114 of the wireless earphone which also adopts a metal electrode structure, so as to transmit power and data signals and realize charging and data transmission functions. In addition to the contact electrodes, the charging case also typically includes a charging interface for connecting a charging cable to receive external power, typically a Micro USB, USB-C or Lightning interface. For example, these interfaces are used for charging the rechargeable battery itself of the second power module 122 in the charging case.

As schematically shown in FIG. 1B, the first group of contact electrodes 114 of the wireless earphone 11 and the second group of contact electrodes 123 of the charger 12 are usually designed to be exposed to the outside to facilitate contact between the two and promote the charging process, but this design may cause some problems. For example, the contact electrodes are typically coated with metal materials (common materials include gold, silver, nickel, and the like) to increase durability and conductivity. These metal materials are easily oxidized, especially when exposed to air or humid environments for a long time. Oxidation may reduce the conductivity and wear resistance of the metal and affect charging performance. In addition, the contact electrodes are susceptible to accumulation of dust, dirt, or other impurities, and may also be affected by liquids (such as sweat). For example, if some conductive impurities, such as sweat, remain on the contact electrode, when a user contacts the wireless earphone with the contact electrode of the charger and starts charging, a charging path in FIG. 1B will include the contact electrodes of the charging case 12 → the sweat → the contact electrodes of the wireless earphone 11, which may cause "electrolysis" phenomenon, resulting in corrosion or short circuit of the contact electrode, and thus may affect the charging performance and life of the contact electrode, and then affect the charging performance and service life of the wireless earphone.

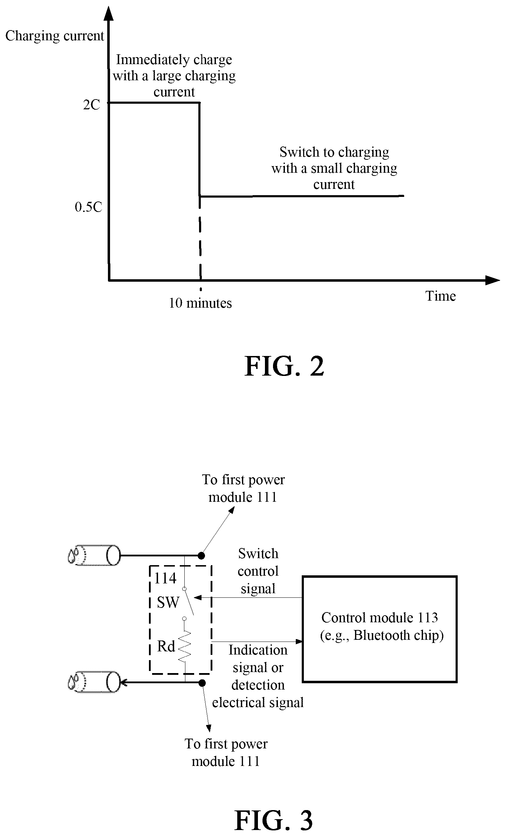

On the other hand, in the process of charging the wireless earphone 11, as shown in the schematic diagram of a charging solution for charging the wireless earphone depicted in FIG. 2, usually when the electrical connection between the charger and the wireless earphone is just established (that is, when the electrical connection is still relatively loose), the rechargeable battery 1111 in the first power module 111 is immediately charged with a large charging current (for example, 2C current, C represents the capacity of the battery itself, the unit is AH/MAH, and the previous coefficient represents a charge and discharge rate), and after the rechargeable battery 111 has been charged for a predetermined time (for example, 10 minutes), it may be switched to a small charging current (for example, 0.5C current) to continue charging the rechargeable battery. The charging current for charging the rechargeable battery 1111 is positively correlated with the current flowing through the first group of contact electrodes 114 and the second group of contact electrodes 123.

However, as described above, when the electrical connection between the charger and the wireless earphone is just established, due to the presence of conductive impurities such as sweat at the contact electrodes (especially the second group of contact electrodes of the wireless earphone), the electrical connection between the charging case and the wireless earphone is not in a good state (that is, the electrical connection is loose), and the charging path includes the contact electrodes of the charging case 12 → the sweat → the contact electrodes of the wireless earphone 11. The inventor of the present application has discovered that, at this stage, a larger charging current will make the "electrolysis" phenomenon more serious. Therefore, after the user disconnects the charger and the wireless earphone and reestablishes the electrical connection many times, a serious corrosion problem may occur at the contact electrodes.

Therefore, a charging solution is needed to eliminate or reduce the corrosion problem at the contact electrode.

In the solution of the embodiment of the present application, it is taken into account that even if there are conductive impurities at the contact electrodes, starting from the initial relatively loose electrical connection established between the wireless earphone 11 and the charger 12, after a period of time, the connection state of the electrical connection between the charger 12 and the wireless earphone 11 may be in a good state. At this point, the electrolysis phenomenon caused by the conductive impurities may be ignored or alleviated. Therefore, it may be considered to eliminate or reduce the adverse effects (such as corrosion problems) of the electrolysis phenomenon at the contact electrodes by delaying the time of starting charging the first power module (specifically its rechargeable battery) in the wireless earphone 11.

For example, the control module 113 in the wireless earphone 11 may be configured to, in response to the electrical connection established between the wireless earphone 11 and the charger 12, perform control to prohibit charging the first power module 111 using charging power from the charger 12 within a first time period; and after expiration of the first time period, perform control to allow charging the first power module 111 using the charging power from the charger 12.

For example, the control module 113 may control, by controlling the charging circuit 1112 in the first power module 111, the charging of the first power module 111 using the charging power from the charger 12 and control the magnitude of the charging current used for charging the first power module 111. That is, the charging circuit 1112 may output, based on the charging power received from the charger 12, a charging current for providing to the rechargeable battery in the first power module 111 under the control of the control module 113 (for example, through DC-DC conversion, linear voltage regulation, or the like). As an example, the input current of the charging circuit 1112 may have the same current value as the output current, or the two may be positively correlated in other ways.

In this way, the time for starting charging the first power module 111 (specifically its rechargeable battery) is delayed, and therefore, the electrical connection between the charger and the wireless earphone is already in a good state when charging starts, that is, the influence of the electrolysis phenomenon caused by the conductive impurities may be basically ignored, thereby reducing or alleviating the corrosion problem at the contact electrode.

In some embodiments, a duration of the first time period may be preset, for example, a fixed value obtained based on experience or experimental tests, such as 5s.

In addition, when the charger is a charging case, an open or closed state of the charging case may be perceived by the control module 113 of the wireless earphone 11 (for example, corresponding to turning off or on the wireless earphone, respectively). Therefore, in other embodiments, the duration of the first time period may be manually controlled by controlling the opening or closing of the charging case. For example, the charging case includes a charging main body and a case cover. The user may place the wireless earphones in the accommodating space of the charging main body of the charging case, wait for a period of time, and then close the case cover. The period of time is the first time period. In response to a closed state of the case cover of the charging case, the control module 113 may determine that the first time period expires.

In some other embodiments, whether the first time period ends may be determined by detecting a connection state between the charger 12 and the wireless earphone 11. For example, the wireless earphone 11 may be provided with a connection detection module for detecting a connection state of the electrical connection between the wireless earphone and the charger, and in response to the connection detection module detecting that the connection state is in a good state (that is, meets a preset requirement), the control module 113 may determine that the first time period expires.

FIG. 3 shows an example structure of a connection detection module according to an embodiment of the present application. As shown in FIG. 3, the connection detection module 115 may include a detection switch SW and a detection resistor Rd (for example, the two are connected in series) connected between the second group of contact electrodes of the wireless earphone, so that a first electrode in the first group of contact electrodes of the charger, a first electrode in the second group of contact electrodes, the detection switch SW and the detection resistor Rd, a second electrode in the second group of contact electrodes, and a second electrode in the first group of contact electrodes constitute a loop. The detection switch SW is in a normally open state, and may be controlled to close when the control module 113 determines that an electrical signal is input from the first group of contact electrodes. When the electrical connection is just being established, the charger 12 generates an electrical signal (e.g., a voltage signal) and transmits the electrical signal to the wireless earphone side. The connection state between the charger and the wireless earphone may be determined by detecting a value of the electrical signal on the loop (for example, a voltage across the detection resistor or a current flowing through the detection resistor). When the electrical connection between the wireless earphone and the charger is relatively loose, the electrolysis phenomenon caused by conductive impurities may cause a transmission parameter (such as an impedance value) on the charging path to change, and therefore, for the same electrical signal from the charger side, the electrical signal detected when the electrical connection between the charger and the wireless earphone is relatively loose is different from the electrical signal detected when the two are fully connected (in a good connection state). Therefore, a value of the detected electrical signal may be compared with a reference value or a reference range corresponding to a good connection state between the charger and the wireless earphone to determine the connection state between the charger and the wireless earphone. If the connection detection module 115 can perform the comparison processing process, the connection detection module 115 may determine the connection state and send indication information of the determined connection state (for example, whether the preset requirements are met) to the control module 113. Alternatively, if the connection detection module 115 cannot perform the comparison processing process, the detected electrical signal may be sent to the control module 113, so that the control module 113 determines the connection state between the charger and the wireless earphone based on the detected electrical signal. When the control module 113 determines that the first time period has expired, a switch control signal may be sent to the detection switch SW so that the detection switch SW is disconnected to restore the normally open state.

In addition, as mentioned above, charging the first power module with a relatively large charging current may cause a more obvious electrolysis phenomenon at the contact electrodes, thereby aggravating the corrosion problem at the contact electrode. Therefore, if the charging current for charging the first power module may be reduced, the corrosion problem at the contact electrode may also be alleviated. However, blindly reducing the charging current may affect the charging efficiency. Therefore, another aspect of the present application further provides a solution for adaptively controlling a charging current.

For example, in a case that the first time period expires and the first power module 111 may be charged with power from the charger 12, the charging current for charging the first power module 111 may be adaptively determined according to the power level therein at this time.

For example, the control module 113 may further be configured to, in response to a power level of the first power module 111 being greater than or equal to a first threshold during the first time period, perform control to charge the first power module 111 with a charging current having a first value after expiration of the first time period. In addition, the control module 113 may further be configured to, in response to the power level of the first power module 111 being less than the first threshold during the first time period, perform control to charge the first power module 111 with a charging current having a second value after expiration of the first time period, where the second value is greater than the first value.

For example, there is no charging current for charging the first power module 111 during the first time period, and therefore, the power level of the first power module 111 detected during this period is more accurate, which may avoid the phenomenon of falsely high power during the charging process. The detection of the power level may be performed by the control module 113 or another detection apparatus that is communicatively connected to the control module 113.

Considering that a user generally uses wireless earphones for a short time every day, such as 1 hour to 3 hours, the power demand for the wireless earphones is not very high. Therefore, when the power level of the first power module 111 is greater than or equal to the first threshold value (for example, 40%), it indicates that the power level of the first power module 111 is at an upper-middle level, and therefore the charging circuit may be controlled to charge it with a small charging current (for example, having a first value such as 0.5C). As a result, when the user uses the wireless earphone again, the power level of the first power module 111 may also meet the user's usage requirements.

On the other hand, when the power level of the first power module 111 is less than the first threshold value (for example, 40%), it indicates that the power level of the first power module 111 is at a low level, and therefore the charging circuit may be controlled to charge it with a large charging current (for example, having a second value such as 2C). As a result, when the user uses the wireless earphone again, the power level of the first power module 111 may also meet the user's usage requirements.

For example, the control module 113 may, in response to the power level of the first power module 111 being greater than or equal to a first threshold, provide a first control signal to the charging circuit in the first power module 111, for controlling the charging circuit to charge the rechargeable battery with a charging current having the first value; and in response to the power level of the first power module 111 being less than the first threshold, provide a second control signal to the charging circuit, for controlling the charging circuit to charge the rechargeable battery with a charging current having the second value. For example, the charging circuit may also have a processing apparatus, and may determine a setting value of the charging current set by the control module based on the control signal received from the control module 113, and adjust a power conversion process involved, so that the charging current may be adjusted to the setting value. In some cases, the wireless earphone may not include a charging circuit and/or a protection circuit. The charging power from the charger may be used directly to charge the rechargeable battery, and a switch is arranged on a charging path to control the delayed start of the charging process and/or adjust the charging current by the charger side.

Optionally, the control module 113 may further be configured to: during a period when the first power module 111 is charged with the charging current having the second value, in response to a currently detected power level of the first power module 111 being greater than a second threshold, perform control to charge the first power module 111 with a charging current having a third value, where the third value is less than the second value, the third value is the same as or different from the first value, and the second threshold is the same as or different from the first threshold.

In other words, the power level of the first power module 111 may be kept detected (regularly or periodically), so that the charging current may be further adaptively adjusted according to the latest detected power level even during charging of the first power module 111. For example, when the first power module 111 is charged with a large charging current, if the latest detected power level is high enough (for example, greater than or equal to 40% as the first threshold, or greater than or equal to another threshold such as 35% or 50%), the charging current may be reduced. The current value (third value) of the reduced charging current may be the same as the first value, or may be another value (for example, 1C) less than the second value.

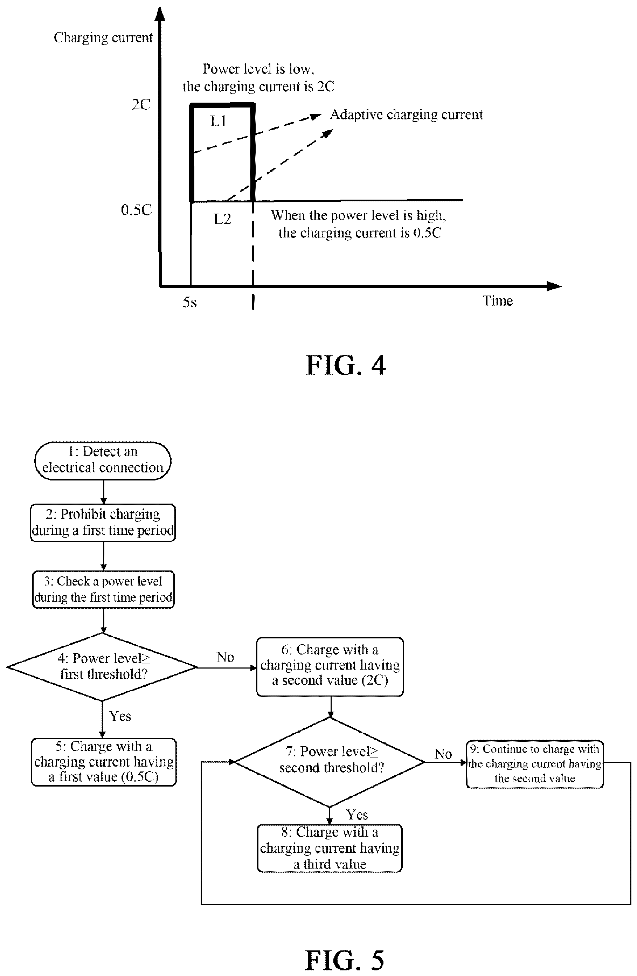

For example, FIG. 4 shows a schematic diagram of a charging solution for charging a wireless earphone according to an embodiment of the present application. As shown in FIG. 4, within the first time period (taking 5s as an example), there is no charging current for charging the first power module of the wireless earphone, and after expiration of the first time period, the charging current may be a first line L1 as shown in FIG. 4, or may be a second line L2 as shown in FIG. 4. The first line L1 corresponds to the situation where the power level of the first power module of the wireless earphone detected in the first time period is less than the first threshold, that is, the charging current first has a large value such as 2C, and then switches to a charging current with a small value (0.5C is taken as an example in the figure) after the latest detected power level reaches the second threshold (which may be the same as or different from the first threshold, and is the same as the first threshold shown in FIG. 4). The second line L2 corresponds to the situation where the power level of the first power module of the wireless earphone detected in the first time period is greater than or equal to the first threshold, that is, the charging current has a small value (such as 0.5C) and is maintained at the value.

The duration of time that the user uses the wireless earphone every day is generally short, such as 1 hour to 3 hours, and therefore, the power level of the rechargeable battery in the first power module is basically maintained at a high level (for example, greater than 50%). In this case, each time the wireless earphone establishes an electrical connection with the charger and starts the charging process after the first time period, the wireless earphone is charged basically with a small charging current (for example, 0.5C), thereby reducing the electrolysis phenomenon at the contact electrode, which reduces the corrosion problem, and the power level of the power module may also ensure the use of the user side.

FIG. 5 shows a process flow of a charging solution according to an embodiment of the present disclosure. It should be understood that the process flow of the charging solution shown in FIG. 5 includes a delayed start charging process and a process for adaptively controlling a charging current. However, even if only one of the delayed start charging process or the process for adaptively controlling the charging current is adopted, the corrosion problem at the contact electrode may be alleviated to a certain extent compared with the existing charging solution.

As shown in FIG. 5, in a process 1, the control module may detect whether the wireless earphone establishes an electrical connection with the charger (for example, the wireless earphone is placed in the charging case). In response to detecting that a voltage is present at the first group of contact electrodes of the wireless earphone (that is, the two pairs of contact electrodes are in contact), the control module may determine that the electrical connection is established.

In a process 2, the control module may prohibit the charging power from the charger from charging the first power module of the wireless earphone within the first time period. For example, the control module may send a disable signal to the charging circuit in the first power module to disable the charging circuit from operating. The specific method for determining the first time period has been described above and will not be repeated here.

In a process 3, the control module may detect the power level of the first power module during the period when charging of the first power module is prohibited. As mentioned above, this detection method can prevent the detected power level from being falsely high.

In a process 4, the control module may determine whether the detected power level is greater than or equal to the first threshold (for example, 40%). If the detected power level is greater than or equal to the first threshold, the process flow proceeds to the process 5, where after expiration of the first time period, the charging circuit is controlled to charge the first power module with the charging current having the first value (for example, 0.5C). In contrast, if the detected power level is less than the first threshold, the process flow proceeds to the process 6, where after expiration of the first time period, the charging circuit is controlled to charge the first power module with the charging current having the second value (for example, 2C) greater than the first value.

After the process 6, in a process 7, the control module may continue to detect the power level of the first power module. For each round of detection, if the newly detected power level is greater than or equal to the second threshold (which may be the same as or different from the first threshold), the process flow proceeds to a process 8 to control the charging circuit to charge the first power module with the charging current having the third value (less than the second value, for example, may be the same as or different from the first value). On the contrary, if the newly detected power level is less than the second threshold, the process flow proceeds to a process 9 to control the charging circuit to charge the first power module with the charging current having the second value.

Therefore, in the wireless earphone of the embodiment of the present application, the charging process of the power module in the wireless earphone is delayed so that the wireless earphone is charged after the a connection state of the electrical connection between the charger and the wireless earphone is in a good state, which may reduce an electrolysis phenomenon at the contact electrode, thereby alleviating a corrosion problem of the contact electrode. In addition, the solution of adaptively controlling the charging current according to the power level of the power module of the wireless earphone may enable charging the wireless earphone with a smaller charging current in most cases, which may also reduce the electrolysis phenomenon at the contact electrode, thereby further alleviating the corrosion problem of the contact electrode. Therefore, the corrosion problem at the contact electrode of the wireless earphone of the embodiment of the present application can be alleviated, so that the charging performance and service life of the wireless earphone and its contact electrodes can be improved.

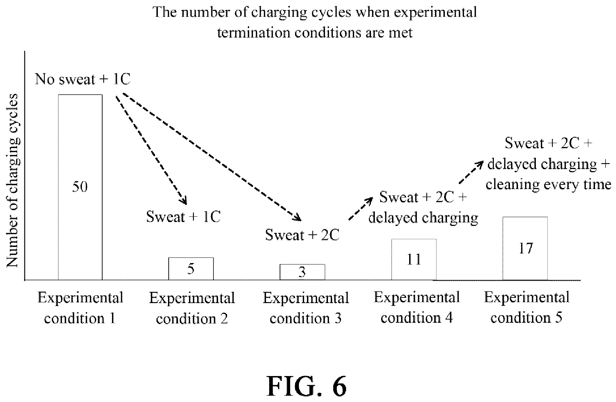

In order to better illustrate the beneficial effects of the charging scheme of the embodiments of the present application on alleviating the corrosion problem at the contact electrode and improving the charging performance of wireless earphones, FIG. 6 further shows a schematic diagram of experimental results of five different experimental conditions for a charging process of a wireless earphone by a charger.

In FIG. 6, five different experimental conditions are shown, numbered 1 to 5 respectively. The different experimental conditions are mainly constructed by whether to set conductive impurities (e.g., artificial sweat) at the contact electrodes, changing the magnitude of the charging current, whether to set a delay, and whether to clean the conductive impurities at the contact electrodes after each use. In addition, during the experiment, the rechargeable battery in the power module of the wireless earphone is cyclically charged from zero to full power, and the operating state of the wireless earphone and the resistance of the contact electrode are recorded at the end of each charging cycle. The experimental termination condition is defined as at least one of the operating state of the wireless earphone being unable to work normally and the resistance value of the resistance of the contact electrode exceeding a predetermined value. The experimental result is the number of times the rechargeable battery has been cyclically charged when the experimental termination condition is met.

For example, in an experimental condition 1, there are no conductive impurities at the contact electrodes of the charger and the wireless earphone, charging is performed immediately when the electrical connection between the charger and the wireless earphone is just established, and the charging current used for charging the wireless earphone is 1C. In the experimental condition 1, it may be measured that the charger can charge the wireless earphone 50 times when the experimental termination condition is met.

In an experimental condition 2, artificial sweat is added as conductive impurities at the contact electrodes of the wireless earphone, charging is performed immediately when the electrical connection between the charger and the wireless earphone is just established, and the charging current used for charging the wireless earphone is 1C. In the experimental condition 2, it may be measured that the charger can charge the wireless earphone 5 times when the experimental termination condition is met. Compared with the experimental result of the experimental condition 1, the artificial sweat at the contact electrodes of the wireless earphone significantly affects the charging performance and service life of the wireless earphone and its contact electrodes.

In an experimental condition 3, artificial sweat is added as conductive impurities at the contact electrodes of the wireless earphone, charging is performed immediately when the electrical connection between the charger and the wireless earphone is just established, and the charging current used for charging the wireless earphone is 2C. In the experimental condition 3, it may be measured that the charger can charge the wireless earphone 3 times when the experimental termination condition is met. Compared with the experimental result of the experimental condition 2, the larger charging current further affects the charging performance and service life of the wireless earphone and its contact electrodes.

In an experimental condition 4, artificial sweat is added as conductive impurities at the contact electrodes of the wireless earphone, charging is not performed immediately when the electrical connection between the charger and the wireless earphone is just established, but starts after waiting for 6s, and the charging current used for charging the wireless earphone is 2C. In the experimental condition 4, it may be measured that the charger can charge the wireless earphone 11 times when the experimental termination condition is met. Compared with the experimental result of the experimental condition 3, by delaying the start of the charging process, the adverse effects of the artificial sweat at the contact electrodes of the wireless earphone and the large charging current on the charging performance and service life of the wireless earphone and its contact electrodes may be alleviated to a certain extent.

In an experimental condition 5, artificial sweat is added as conductive impurities at the contact electrodes of the wireless earphone, charging is not performed immediately when the electrical connection between the charger and the wireless earphone is just established, but starts after waiting for 5s and the charging current is 2C. In addition, the artificial sweat at the contact electrodes is cleaned after each charging. In the experimental condition 5, it may be measured that the charger can charge the wireless earphone 17 times. Compared with the experimental result of the experimental condition 4, the reduced artificial sweat at the contact electrodes can alleviate the adverse effects of the large charging current on the charging performance and service life of the wireless earphone and its contact electrodes.

Therefore, through the experimental results shown in FIG. 5, it may be seen that by delaying the charging process of the power module in the wireless earphone to charge the wireless earphone after the electrical connection between the charger and the wireless earphone is established, even if a large charging current is still maintained, the number of charge and discharge times when the experimental termination condition is reached may increase relative to the number of charge and discharge times when the charging process is not delayed, that is, the corrosion rate is slower, so the corrosion problem of the contact electrode may also be alleviated.

According to another aspect of the present application, a charging method is further provided.

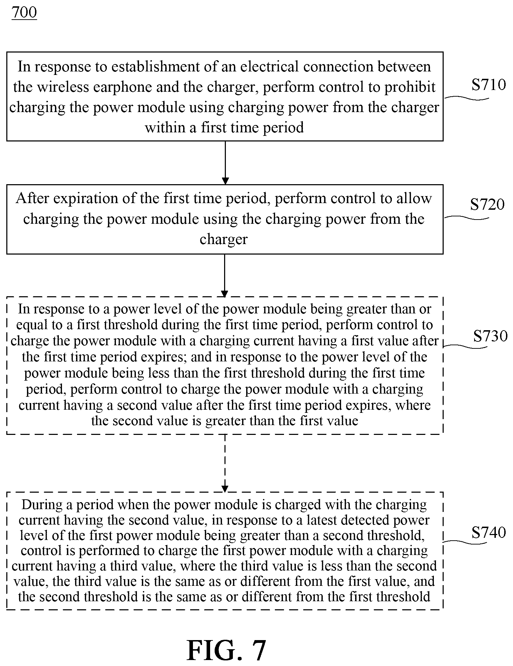

FIG. 7 shows a charging solution according to an embodiment of the present disclosure. The charging method may be used for charging a wireless earphone by a charger, where a power module in the wireless earphone is used for acquiring charging power from the charger. The charging method may be performed by the control module 113 as shown in FIG. 1B, the wireless earphone may be the wireless earphone 11 as shown in FIG. 1A or 1B, and the power module may be the first power module 111 as shown in FIG. 1B.

As shown in FIG. 7, in a step S710, in response to establishment of an electrical connection between the wireless earphone and the charger, control is performed to prohibit charging the power module using charging power from the charger within a first time period.

In a step S720, after expiration of the first time period, control is performed to allow charging the power module using the charging power from the charger.

For example, the first time period has a preset time length; or the expiration of the first time period is determined in response to a good connection state of the electrical connection between the wireless earphone and the charger; or the expiration of the first time period is determined in response to a closed state of a case cover of a charging case serving as the charger.

As mentioned above, after it is detected that the wireless earphone and the charging case have established an electrical connection, the wireless earphone is not charged immediately. Instead, the charging process is delayed from starting so that the charging process occurs after the connection state of the electrical connection between the wireless earphone and the charging case is in a good state. Therefore, the electrolysis phenomenon caused by conductive impurities at the contact electrode may be avoided, thereby alleviating the corrosion problem at the contact electrode, so as to improve the charging performance and service life of the wireless earphone and its contact electrodes.

Optionally, the method 700 may further include a step S730, where in response to a power level of the power module being greater than or equal to a first threshold during the first time period, control is performed to charge the power module with a charging current having a first value after expiration of the first time period; and in response to the power level of the power module being less than the first threshold during the first time period, control is performed to charge the power module with a charging current having a second value after expiration of the first time period, where the second value is greater than the first value.

As mentioned above, the charging current may be adaptively adjusted so that the charging current for charging the first power module may be basically maintained at a low current value in actual applications, thereby further avoiding the electrolysis phenomenon caused by conductive impurities at the contact electrodes, further reducing the corrosion problem at the contact electrodes, and improving the charging performance and service life of the wireless earphone and its contact electrodes.

Optionally, in response to a power level of the power module being greater than or equal to the first threshold, a first control signal may be provided to a charging circuit in the power module, for controlling the charging circuit to charge the power module (including the rechargeable battery) with a charging current having the first value; and in response to the power level of the power module being less than the first threshold, a second control signal is provided to the charging circuit, for controlling the charging circuit to charge the power module with a charging current having the second value.

In addition, the method 700 may further include a step S740, where during a period when the power module is charged with the charging current having the second value, in response to a currently detected power level of the first power module being greater than a second threshold, control is performed to charge the first power module with a charging current having a third value, where the third value is less than the second value, the third value is the same as or different from the first value, and the second threshold is the same as or different from the first threshold.

In this way, by continuously detecting the power level of the power module, after the power module is charged with a large charging current to reach a certain power level, it may switch to continue charging the power module with a small charging current. Therefore, by reducing the charging current, the electrolysis phenomenon at the contact electrode is alleviated to slow down the corrosion or aging of the contact electrode.

More details of each step in FIG. 7 may be obtained with reference to the above descriptions of FIG. 1A to FIG. 6, which will not be repeated here.

The control module in the wireless earphone shown in FIG. 1B and the charging control module or other control modules (not shown) in the charger may include a processor having a processing function. The processing module in the charging circuit may also include a processor having processing functions.

As an example, a processor may include an integrated circuit chip having signal processing capabilities. The processor may be a general-purpose processor, a digital signal processor (DSP), an application-specific integrated circuit (ASIC), a field-programmable gate array (FPGA), or other programmable logic devices, separate gates or transistor logics, or separate hardware components, for implementing or performing the methods, steps, or logic block diagrams disclosed in the embodiments of the present disclosure. Additionally, the processor may also include or be combined with a memory, and the memory may include a non-volatile storage medium. The non-volatile storage medium stores a computer executable program, which, when executed, enables the processor to implement various operations as described above.

The nonvolatile memory may be a read-only memory (ROM), a programmable read-only memory (PROM), an erasable programmable read-only memory (EPROM), an electrically erasable programmable read-only memory (EEPROM), or a flash memory. It should be noted that memory of the methods described herein is intended to include, but is not limited to, these and any other suitable types of memory.

As used herein (including in the claims), "or" used in a list of items (e.g., a list of items followed by phrases such as "at least one of" or "one or more of") indicates an inclusive list so that, for example, a list of at least one of A, B, or C means A or B or C or AB or AC or BC or ABC (i.e., A and B and C). Likewise, as used herein, the phrase "based on" should not be construed as referring to a closed set of conditions. For example, an exemplary step described as "based on condition A" may be based on both condition A and condition B without departing from the scope of the present disclosure. In other words, as used herein, the phrase "based on" should be interpreted in the same manner as the phrase "based at least in part on".

In the appended drawings, similar components or features may have the same reference labels. Additionally, various components of the same type may be distinguished by following the reference label with a dash and a second label that distinguishes between the similar components. If only the first reference label is used in the specification, the description is applicable to any one of the similar components having the same first reference label regardless of the second reference label or other subsequent reference labels.

Example configurations are described herein in conjunction with the detailed descriptions set forth in the accompanying drawings, but are not intended to represent all examples that may be implemented or fall within the scope of the claims. As used herein, the term "exemplary" means "serving as an example, instance, or illustration," and does not mean "preferred" or "advantageous over other examples". The detailed description includes specific details for the purpose of providing a thorough understanding of the described techniques. However, these techniques may be practiced without these specific details. In some instances, well-known structures and devices are shown in block diagram form in order to avoid obscuring the concepts of the examples being described.

The description herein is provided to enable those skilled in the art to make or use the present disclosure. Various modifications to the present disclosure will be readily apparent to those skilled in the art, and the generic principles defined herein may be applied to other variations without departing from the scope of the present disclosure. Thus, the present disclosure is not to be limited to the examples and designs described herein but is to be accorded the widest scope consistent with the principles and novel features disclosed herein.

## Claims

1. A wireless earphone, comprising:
a first group of contact electrodes, for contacting with a second group of contact electrodes of a charger to establish an electrical connection between the wireless earphone and the charger;
an earphone module, for outputting a sound signal;
a power module, for providing operating power to the earphone module, wherein the power module is charged from the charger via the first group of contact electrodes; and
a control module, configured to:
in response to establishment of the electrical connection between the wireless earphone and the charger, perform control to prohibit charging the power module using charging power from the charger within a first time period; and
after expiration of the first time period, perform control to allow charging the power module using the charging power from the charger.

2. The wireless earphone according to claim 1, wherein the control circuit is further configured to:
in response to a power level of the power module being greater than or equal to a first threshold during the first time period, perform control to charge the power module with a charging current having a first value after expiration of the first time period; and
in response to the power level of the power module being less than the first threshold during the first time period, perform control to charge the power module with a charging current having a second value after expiration of the first time period,
wherein the second value is greater than the first value.

3. The wireless earphone according to claim 2, wherein the control module is further configured to:
during a period when the power module is charged with the charging current having the second value, in response to a latest detected power level of the power module being greater than a second threshold, perform control to charge the power module with a charging current having a third value,
wherein the third value is smaller than the second value, the third value is the same as or different from the first value, and the second threshold is the same as or different from the first threshold.

4. The wireless earphone according to claim 2, wherein the power module comprises:
a rechargeable battery, for storing power and providing the operating power to the earphone module; and
a charging circuit, connected to the first group of contact electrodes to receive the charging power from the charger, and configured to, in response to control of the control module, convert the charging power from the charger into a charging current for charging the rechargeable battery.

5. The wireless earphone according to claim 4, wherein when performing control to charge the power module, the control module is configured to:
in response to a power level of the rechargeable battery being greater than or equal to the first threshold, provide a first control signal to the charging circuit, for controlling the charging circuit to charge the rechargeable battery with a charging current having the first value; and
in response to the power level of the rechargeable battery being less than the first threshold, provide a second control signal to the charging circuit, for controlling the charging circuit to charge the rechargeable battery with a charging current having the second value.

6. The wireless earphone according to claim 1, wherein the charger is a charging case, and comprises a charging main body and a case cover,
wherein, in response to a closed state of the case cover of the charging case, the control module determines that the first time period expires.

7. The wireless earphone according to claim 1, wherein the first time period has a preset time length, or
the wireless earphone further comprises: a connection detection module for detecting a connection state of the electrical connection between the wireless earphone and the charger, and wherein in response to the connection detection module detecting that the connection state meets a preset requirement, the control module determines that the first time period expires.

8. The wireless earphone according to claim 1, wherein the control module is further configured to:
establish a wireless communication connection with an external electronic device;
acquire an audio signal from the external electronic device based on the wireless communication connection; and
control, based on the audio signal, the earphone module to output the sound signal.

9. A wireless earphone system, comprising:
a charging case; and
the wireless earphone according to any one of claims 1 to 8,
wherein the charging case is used for accommodating the wireless earphone.

10. A charging method for a wireless earphone, wherein a power module in the wireless earphone is used for acquiring charging power from a charger, the method comprising:
in response to establishment of an electrical connection between the wireless earphone and the charger, performing control to prohibit charging the power module using charging power from the charger within a first time period; and
after expiration of the first time period, performing control to allow charging the power module using the charging power from the charger.

11. The charging method according to claim 10, further comprising:
in response to a power level of the power module being greater than or equal to a first threshold during the first time period, performing control to charge the power module with a charging current having a first value after expiration of the first time period; and
in response to the power level of the power module being less than the first threshold during the first time period, performing control to charge the power module with a charging current having a second value after expiration of the first time period,
wherein the second value is greater than the first value.

12. The charging method according to claim 11, further comprising:
during a period when the power module is charged with the charging current having the second value, in response to a current detected power level of the power module being greater than a second threshold, performing control to charge the power module with a charging current having a third value,
wherein the third value is smaller than the second value, the third value is the same as or different from the first value, and the second threshold is the same as or different from the first threshold.

13. The charging method according to claim 10, wherein
the first time period has a preset time length, or
the expiration of the first time period is determined in response to a connection state of the electrical connection between the wireless earphone and the charger meeting a preset requirement, or
the expiration of the first time period is determined in response to a closed state of a case cover of a charging case serving as the charger.

14. The charging method according to claim 11, wherein performing control to charge the power module with the charging current having the first value or the second value comprises:
in response to a power level of a rechargeable battery of the power module being greater than or equal to the first threshold, providing a first control signal to the charging circuit in the power module, for controlling the charging circuit to charge the rechargeable battery with a charging current having the first value; and
in response to the power level of the rechargeable battery being less than the first threshold, providing a second control signal to the charging circuit, for controlling the charging circuit to charge the rechargeable battery with a charging current having the second value.
